Europäisches Patentamt

European Patent Office

Office européen des brevets

(11) Veröffentlichungsnummer : **0 047 222**
**B1**

(12) **EUROPÄISCHE PATENTSCHRIFT**

(45) Veröffentlichungstag der Patentschrift :
26.09.84

(51) Int. Cl.³ : **B 60 P 7/08**, B 60 T 3/00

(21) Anmeldenummer : 81730078.3

(22) Anmeldetag : 21.08.81

(54) Sicherungselement zur Sicherung der Lage von Ketten- und/oder Räderfahrzeugen auf Eisenbahnwagen.

(30) Priorität : 30.08.80 DE 3032817

(43) Veröffentlichungstag der Anmeldung :
10.03.82 Patentblatt 82/10

(45) Bekanntmachung des Hinweises auf die Patenterteilung : 26.09.84 Patentblatt 84/39

(84) Benannte Vertragsstaaten :
AT BE CH FR GB IT LI NL SE

(56) Entgegenhaltungen :
DE-C-  922 396
FR-A- 1 587 176
FR-A- 2 342 625
FR-E-   46 791
US-A- 1 861 549
US-A- 2 613 764
US-A- 2 851 127
US-A- 3 265 159
US-A- 3 734 241

(73) Patentinhaber : RUD-Kettenfabrik Rieger & Dietz
GmbH u. Co.
Friedensinsel
D-7080 Aalen 1 (DE)

(72) Erfinder : Wiarda, Tilemann, Dipl.-Ing.
Urftstrasse 13
D-5000 Köln 50 (DE)
Erfinder : Rieger, Hansjörg, Dr.
Saarstrasse 48
D-7080 Aalen (DE)

(74) Vertreter : Jander, Dieter, Dipl.-Ing. et al
Dipl.-Ing. Dieter Jander Dr.-Ing. Manfred Böning
Patentanwälte Kurfürstendamm 66
D-1000 Berlin 15 (DE)

**Beschreibung**

Die Erfindung betrifft ein Sicherungselement mit einer Grundplatte und mit einem Sicherungsanschlag zur Sicherung der Lage von Ketten- und/oder Räderfahrzeugen auf Eisenbahnwagen mit einer Ladefläche aus Holz, bei dem ein Teil der Grundplatte eine Auflage für eine Kette oder ein Rad bildet, deren bzw. dessen Verlagerung in der gesicherten Stellung in eine Richtung durch den Sicherungsanschlag begrenzt ist, wobei an der Unterseite der Grundplatte durch das Eigengewicht des zu sichernden Fahrzeuges in die Ladefläche drückbare Dorne angeordnet sind.

Bekannt ist ein Sicherungselement der vorstehenden Art zur Sicherung von Fahrzeugen gegen Querverschiebungen, bei dem die Unterseite der Grundplatte mit einer Vielzahl von Dornen versehen ist (US-A-2 851 127).

Der Erfindung liegt die Aufgabe zugrunde, ein Sicherungselement der in Betracht gezogenen Art zu schaffen, das bei weitgehender Schonung des Holzbodens des Eisenbahnwagens das zu sichernde Fahrzeug fest in der Sicherungsstellung fixiert. Diese Aufgabe wird erfindungsgemäß dadurch gelöst, daß die Dorne auf einem ersten über die Grundplatte vorstehenden Teil ihrer Länge einen konstanten und auf einem sich hieran anschliessenden zweiten Teil ihrer Länge den sich zu einer Spitze verjüngenden Querschnitt aufweisen.

Das erfindungsgemässe Sicherungselement bietet den Vorteil, daß die Dorne ähnlich wie Nägel von oben her in die Holzplanken des Eisenbahnwagens getrieben werden und ihr einen konstanten Querschnitt aufweisender Teil dem Sicherungselement einen festen formschlüssigen Halt auf dem Wagenboden vermittelt.

Die Zahl der vorzugsweise in Sicherungsrichtung versetzt zueinander angeordneten Dorne sollte nicht größer als vier sein. Will man die Reibung zwischen dem Sicherungselement und den Holzplanken erhöhen, so empfiehlt es sich, die Grundplatte auf ihrer die Dorne tragenden Seite mit einer einen hohen Reibungskoeffizienten aufweisenden Auflage zu versehen.

Zur zusätzlichen Arretierung des Sicherungselementes kann die Grundplatte mit einem Ausleger versehen werden, der an seinem dem Sicherungsanschlag abgewandten Ende einen Halteanschlag trägt, der zweckmässigerweise von dem in Richtung der Dorne abgewinkelten Ende des Auslegers gebildet wird.

Zur Quersicherung von Fahrzeugen sollte man Sicherungselemente mit einem Sicherungsanschlag mit annähernd vertikal verlaufender Anschlagfläche verwenden. Demgegenüber bieten zur Fahrzeuglängssicherung Sicherungselemente mit weniger steil verlaufenden Anschlagflächen Vorteile. Dies deshalb, weil die an der Vorderseite des Fahrzeuges zu liegen kommenden Sicherungselemente beim Verladen des Fahrzeuges von diesem kurzfristig vor- und rückwärts überfahren werden müssen, um die hinteren Sicherungselemente zu etablieren. Nach einem weiteren Vorschlag der Erfindung wird ein einzelnes Sicherungselement mit Sicherungsanschlägen versehen, deren Neigung zur Grundfläche unterschiedlich groß ist.

Weitere Einzelheiten und Merkmale der Erfindung ergeben sich aus den Ansprüchen und der nachfolgenden Beschreibung mehrerer in der beigefügten Zeichnung dargestellter Ausführungsbeispiele. Es zeigen :

Figur 1   die Seitenansicht eines ersten Sicherungselementes ;

Figur 2   die Draufsicht auf das Sicherungselement gemäß Figur 1 ;

Figur 3   die Rückansicht des Sicherungselementes gemäß Figur 1 und 2 ;

Figur 4   die Seitenansicht eines zweiten einen Haupt- und einen Zusatzteil aufweisenden Sicherungselementes ;

Figur 5   die Draufsicht auf das zweite Sicherungselement ;

Figur 6   eine Rückansicht des Sicherungselementes gemäß Figur 4 und 5 ;

Figur 7   in perspektivischer Darstellung das vom Hauptteil des Sicherungselementes gemäß Figuren 4-6 getrennte Zusatzteil ;

Figur 8   die perspektivische Ansicht eines dritten Sicherungselementes mit zwei Sicherungsanschlägen und einem Halteanschlag ;

Figur 9   schematisch die Seitenansicht eines Sicherungselementes mit einem Halteanschlag, dessen Abstand vom Sicherungsanschlag veränderbar ist ;

Figur 10   die perspektivische Ansicht eines Dornes mit einem X-förmigen Querschnitt und

Figur 11   schematisch die Anordnung von acht zur Lagesicherung eines Kettenfahrzeuges dienenden Sicherungselementen mit jeweils zwei Sicherungsanschlägen.

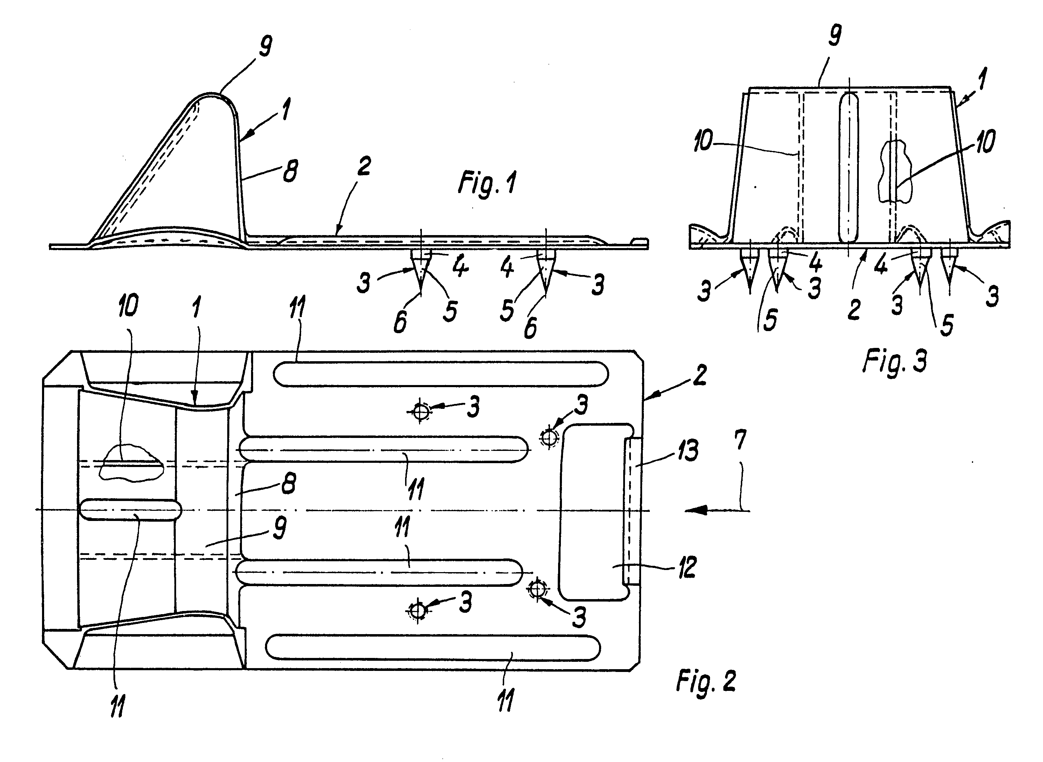

Das in den Fig. 1 bis 3 dargestellte Sicherungselement besitzt einen allgemein mit 1 bezeichneten Sicherungsanschlag und eine allgemein mit 2 bezeichnete Grundplatte. Mit der Grundplatte 2 sind vier allgemein mit 3 bezeichnete Dorne verbunden, die auf einem Teil 4 einen konstanten Querschnitt und auf einem Teil 5 ihrer Länge einen sich zu einer Spitze 6 verjüngenden Querschnitt aufweisen.

Die Länge des Teiles 4 konstanten Querschnittes ist dabei kleiner als die Länge des Teils 5 mit sich verjüngendem Querschnitt. Bewährt haben sich Konstruktionen, bei denen die Länge des einen konstanten kreisförmigen Querschnitt aufweisenden Teils 4 etwa gleich einem Drittel der Länge des Teils 5 mit sich verjüngendem Querschnitt ist.

In Sicherungsrichtung, d. h. in Richtung des Pfeiles 7 in Fig. 2 betrachtet, sind die Dorne 3 zueinander versetzt angeordnet. Durch die versetzte Anordnung wird die Fixierung des Sicherungselementes verbessert.

Die Zahl der Dorne 3 sollte nicht zu hoch sein.

Zweckmässig ist die Verwendung von vier oder auch sechs Dornen. Wie aus Fig. 3 erkennbar, verlaufen die Mittellinien der Dorne 3 senkrecht zur Grundplatte 2. Aufgrund dieser Anordnung lassen sich die Dorne ähnlich wie Nägel unter dem Gewicht des Fahrzeuges in die Holzauflage des Eisenbahnwagens eintreiben.

Das Sicherungselement gemäß Fig. 1-3 dient zur Quersicherung von Fahrzeugen. Es ist daher mit einer annähernd vertikal verlaufenden Anschlagfläche 8 versehen. Der Kopf 9 des Sicherungselementes ist abgerundet. Im Inneren des Sicherungsanschlages 1 sind Verstärkungsstege 10 angeordnet. Zur Verstärkung des Sicherungselementes dienen darüber hinaus Versteifungsrippen 11.

Um das Transportieren des aus Stahlblech mit einer Stärke von 4-5 mm hergestellten Sicherungselementes zu erleichtern, ist dessen Grundplatte in griffbreitem Abstand von einem ihrer Ränder mit einer Ausnehmung 12 versehen. Man erhält auf diese Weise einen Tragegriff 13.

Die Größe des freien, d. h. neben dem Sicherungsanschlag 1 gelegenen Teils der Grundplatte ist so bemessen, daß sie eine Auflagefläche liefert, die der Breite der Fahrzeugkette oder des Fahrzeugrades entspricht.

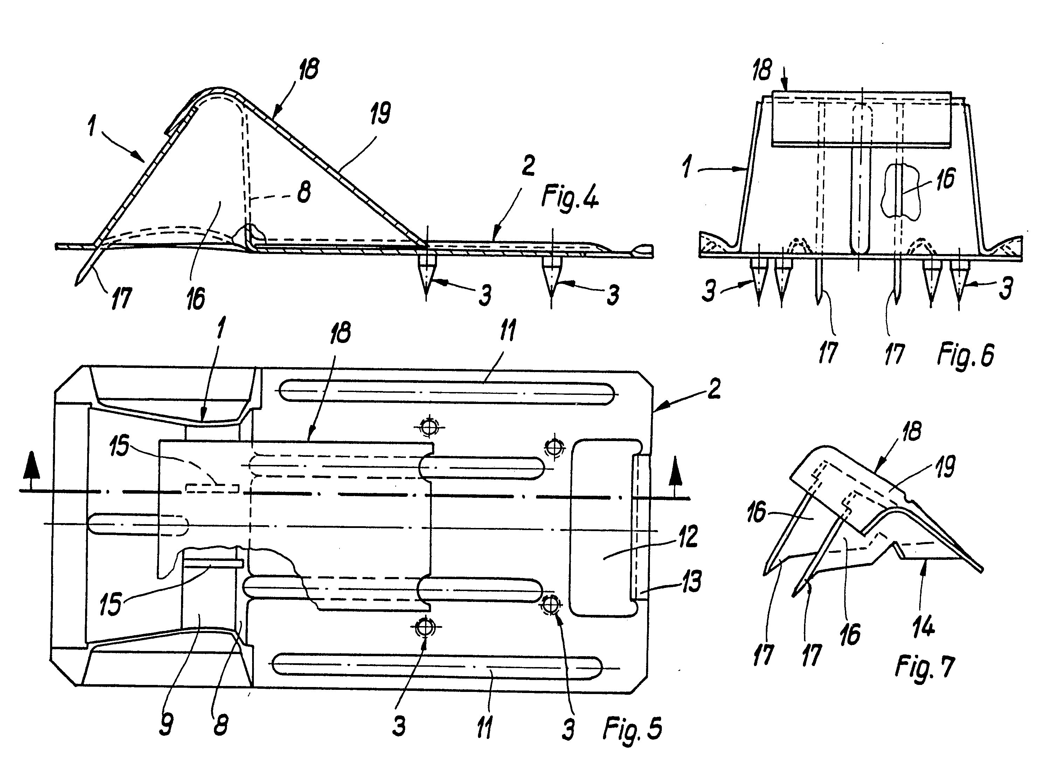

Will man das in den Fig. 1-3 dargestellte Sicherungselement auch zur Sicherung von Fahrzeugen gegen Verschiebungen in Fahrzeuglängsrichtung einsetzen, so kann man es mit einem Zusatzteil versehen, wie dies in den Fig. 4-7 dargestellt ist.

Um das Sicherungselement gemäß Fig. 1-3 mit einem Zusatzteil 14 kombinieren zu können, ist der Sicherungsanschlag 1 mit zwei im Abstand voneinander angeordneten parallelen Schlitzen 15 versehen, die sich von der Anschlagfläche 8 bis in den Bereich des Kopfes 9 erstrecken. In diese Schlitze 15 sind Stützstege 16 des Zusatzteiles steckbar. An den vorderen Enden der Stützstege befinden sich schräg nach unten vorstehende Dorne 17, die aus dem unten offenen Sicherungsanschlag 1 herausragen.

Das Zusatzteil 14 bildet einen weiteren Sicherungsanschlag 18, dessen Anschlagfläche 19 eine Neigung aufweist, die größer ist als die Neigung der Anschlagfläche 8.

Bei Instellungbringen des Fahrzeuges laufen dessen Ketten oder Räder auf die Anschlagfläche 19 auf. Sie drücken dabei das Zusatzteil 14 nach unten. Die auf das Zusatzteil 14 ausgeübte Kraft verläuft in etwa in Richtung der Dorne 17. Dadurch, daß die Stützstege 16 in den Schlitzen 15 geführt werden, dringen die Dorne in das Holz des Bodens des Eisenbahnwagens ein und verankern das Stützteil fest in dem Holzboden.

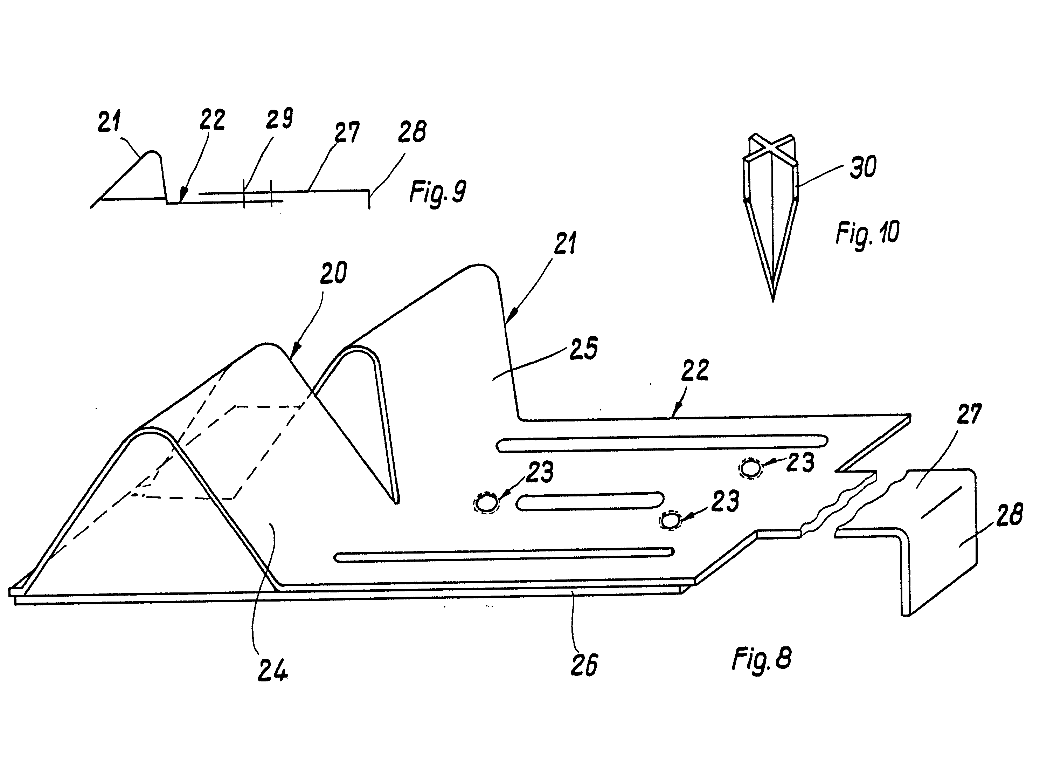

Sicherungselemente gemäß Fig. 4-7 verwendet man in den Fällen, in denen die Ladefläche im Verhältnis zur Breite des Fahrzeuges vergleichsweise schmal ist. Ist die Ladefläche eines Eisenbahnwagens gegenüber der Fahrzeugbreite groß, so empfiehlt sich die Anwendung von Sicherungselementen der in Fig. 8 dargestellten Art. Das in Fig. 8 gezeigte Sicherungselement besitzt zwei nebeneinander angeordnete Sicherungsanschläge 20 und 21, die sich an eine Grundplatte 22 anschliessen, welche drei Dorne 23 trägt. Der Sicherungsanschlag 20 besitzt eine stark geneigte Anschlagfläche 24 für die Längssicherung von Fahrzeugen, während der Sicherungsanschlag 21 mit einer im wesentlichen vertikal verlaufenden Anschlagfläche 25 für die Quersicherung von Fahrzeugen versehen ist.

An der Unterseite der Grundplatte 22 ist diese mit einer Auflage 26 versehen, die über einen hohen Reibungskoeffizienten verfügt, elastisch ist und aus Gummi oder einem Gummiersatzstoff besteht.

Das in Fig. 8 dargestellte Sicherungselement weist eine Grundplatte 22 mit einem Ausleger 27 auf, der an seinem den Sicherungsanschlägen 20, 21 abgewandten Ende mit einem Halteanschlag 28 versehen ist. Der Halteanschlag 28 wird dabei von dem in Richtung der Dorne 23 abgewinkelten Ende des Auslegers 27 gebildet.

In Fig. 9 ist eine Variante des Sicherungselementes gemäß Fig. 8 schematisch angedeutet, bei dem der Ausleger 27 gegenüber der Grundplatte 22 verschiebbar gelagert ist. Die verschiebbare Lagerung läßt sich dadurch realisieren, daß man den Ausleger 27 mit Langlöchern versieht, durch die Schraubenbolzen 29 greifen, die in normalen Rundlöchern der Grundplatte geführt sind.

In den bisherigen Ausführungsbeispielen waren die Grundplatten mit Dornen 3 versehen, deren Querschnitt kreisförmig war. Fig. 10 zeigt einen Dorn 30 mit X-förmigem Querschnitt.

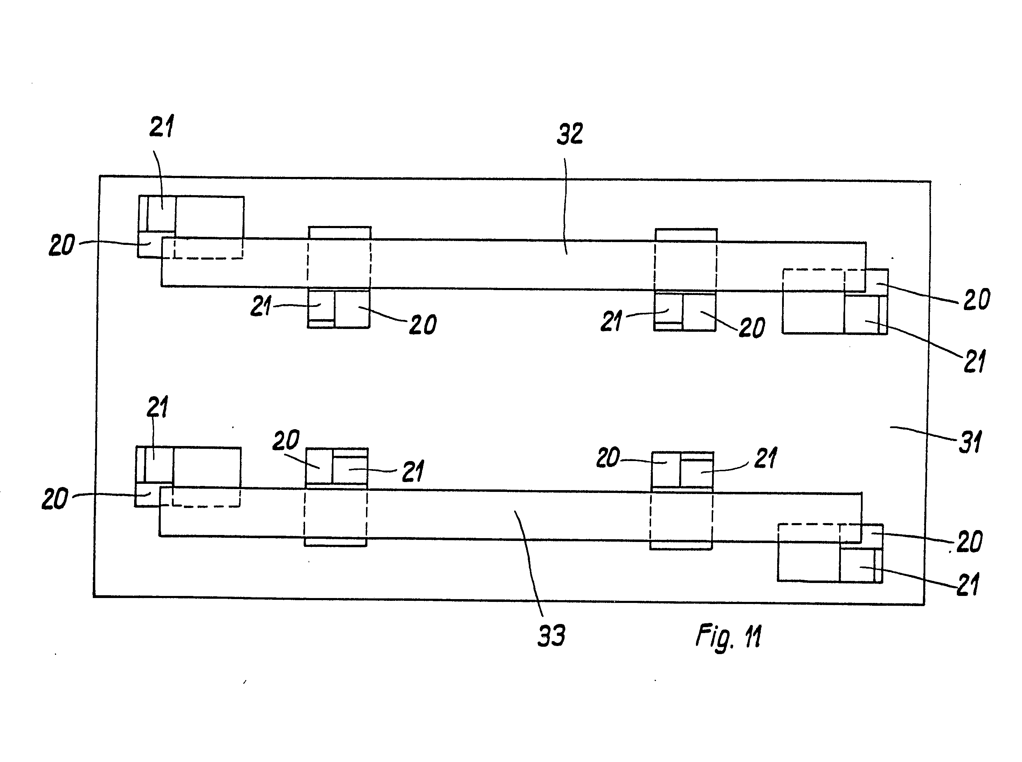

In Fig. 11 ist 31 die Ladefläche eines Eisenbahnwagens, während 32 und 33 die Ketten eines Kettenfahrzeuges andeuten. Zur Sicherung dieses Fahrzeuges dienen acht Sicherungselemente, deren Aufbau weitgehend dem Sicherungselement gemäß Fig. 8 entspricht. Auf Ausleger 27 wurde bei den dargestellten Sicherungselementen allerdings verzichtet. Wie man der Schemazeichnung zu entnehmen vermag, befinden sich bei den zur Längssicherung verwendeten Sicherungselementen die Sicherungsanschläge 21 in einer unwirksamen Stellung, während ihnen im Falle der Quersicherung die Sicherungsaufgabe übertragen ist.

## Ansprüche

1. Sicherungselement mit einer Grundplatte (2, 22) und einem Sicherungsanschlag (1) zur Sicherung der Lage von Ketten- und/oder Räderfahrzeugen auf Eisenbahnwagen mit einer Ladefläche aus Holz, bei dem ein Teil der Grundplatte eine Auflage für eine Kette oder ein Rad bildet, deren bzw. dessen Verlagerung in der gesicherten Stellung in eine Richtung durch den Sicherungsanschlag begrenzt ist, wobei an der Unterseite der Grundplatte durch das Eigengewicht des zu sichernden Fahrzeuges in die Lauffläche drückbare Spitze Dorne (3, 23, 30) angeordnet sind, dadurch gekennzeichnet, daß die Dorne (3, 23, 30) auf einem ersten über die Grundplatte vorstehenden Teil (4) ihrer Länge einen konstanten Querschnitt und auf einem sich hieran anschliessenden zweiten Teil (5) ihrer Länge den sich zu einer Spitze verjüngenden Querschnitt aufweisen.

2. Sicherungselement nach Anspruch 1, dadurch gekennzeichnet, daß der konstante Querschnitt der Dorne (3) kreisförmig ist.

3. Sicherungselement nach Anspruch 1, dadurch gekennzeichnet, daß der konstante Querschnitt der Dorne (30) X-förmig ist.

4. Sicherungselement nach einem der Ansprüche 1-3 dadurch gekennzeichnet, daß die Länge des Teils (4) konstanten Querschnitts kleiner als die Länge des Teils (5) mit sich verjüngendem Querschnitt ist.

5. Sicherungselement nach Anspruch 4, dadurch gekennzeichnet, daß die Länge des Teils (4) konstanten Querschnitts etwa gleich einem Drittel der Länge des Teils (5) mit sich verjüngendem Querschnitt ist.

6. Sicherungselement nach einem der Ansprüche 1-5, dadurch gekennzeichnet, daß sämtliche Dorne (3) der Grundplatte (2), in Sicherungsrichtung betrachtet, zueinander versetzt angeordnet sind.

7. Sicherungselement nach einem der Ansprüche 1-6, dadurch gekennzeichnet, daß die Zahl der Dorne (3) der Grundplatte (2) auf vier begrenzt ist.

8. Sicherungselement nach einem der Ansprüche 1-7, dadurch gekennzeichnet, daß die Mittellinien der Dorne (3) senkrecht zur Grundplatte (2) verlaufen.

9. Sicherungselement nach einem der Ansprüche 1-8, dadurch gekennzeichnet, daß die Grundplatte (22) auf ihrer die Dorne (23) tragenden Seite mit einer einen hohen Reibungskoeffizienten aufweisenden Auflage (26) versehen ist.

10. Sicherungselement nach Anspruch 9, dadurch gekennzeichnet, daß die Auflage (26) elastisch ist.

11. Sicherungselement nach Anspruch 10, dadurch gekennzeichnet, daß die Auflage (26) aus Gummi oder einem Gummiersatzstoff besteht.

12. Sicherungselement nach einem der Ansprüche 1 bis 11, dadurch gekennzeichnet, daß die Grundplatte (22) einen Ausleger (27) aufweist, der an seinem dem Sicherungsanschlag (20, 21) abgewandten Ende mit einem Halteanschlag (28) zur Sicherung gegen Verschiebungen des Sicherungselementes gegenüber dem Eisenbahnwagen versehen ist.

13. Sicherungselement nach Anspruch 12, dadurch gekennzeichnet, daß der Halteanschlag (28) von dem in Richtung der Dorne (23) abgewinkelten Ende des Auslegers (27) gebildet wird.

14. Sicherungselement nach Anspruch 12 oder 13, dadurch gekennzeichnet, daß der Abstand des Sicherungsanschlages (21) gegenüber dem Halteanschlag (28) einstellbar ist (Fig. 9).

15. Sicherungselement nach einem der Ansprüche 1 bis 14, dadurch gekennzeichnet, daß sein Sicherungsanschlag (1) mindestens eine annähernd vertikal verlaufende Anschlagfläche (8) aufweist.

16. Sicherungselement nach Anspruch 15, dadurch gekennzeichnet, daß es mit einem weiteren Sicherungsanschlag (18 ; 20) versehen ist, der eine Anschlagfläche (19 ; 24) aufweist, deren Neigung größer als die Neigung der Anschlagfläche (8 ; 25) des ersten Sicherungsanschlages (1 ; 21) ist.

17. Sicherungselement nach Anspruch 16, dadurch gekennzeichnet, daß der Sicherungsanschlag (18) mit der stärker geneigten Anschlagfläche (19) von einem mit dem Sicherungselement lösbar verbundenen Zusatzteil (14) gebildet wird.

18. Sicherungselement nach Anspruch 17, dadurch gekennzeichnet, daß das Zusatzteil (14) mindestens einen in jeweils einen Schlitz (15) des ersten Sicherungsanschlages (1) steckbaren Stützsteg (16) aufweist.

19. Sicherungselement nach Anspruch 18, dadurch gekennzeichnet, daß der Stützsteg (16) mit einem in Sicherungsrichtung schräg nach unten vorstehenden Dorn (17) versehen ist.

20. Sicherungselement nach Anspruch 19, dadurch gekennzeichnet, daß der Dorn (17) von einem Teil des Stützsteges (16) gebildet wird.

21. Sicherungselement nach Anspruch 16, dadurch gekennzeichnet, daß die beiden Sicherungsanschläge (20, 21) nebeneinander angeordnet sind.

22. Sicherungselement nach einem der Ansprüche 1 bis 21, dadurch gekennzeichnet, daß die Grundplatte (2 ; 22) eine der Breite der Fahrzeugkette oder des Fahrzeugrades entsprechende Auflagefläche aufweist.

23. Sicherungselement nach einem der Ansprüche 1 bis 22, dadurch gekennzeichnet, daß die Grundplatte (2) in griffbreitem Abstand von einem ihrer Ränder mit einer Ausnehmung (12) versehen ist.

24. Sicherungselement nach einem der Ansprüche 1 bis 23, dadurch gekennzeichnet, daß es aus Stahlblech besteht.

## Claims

1. Securing element with a base plate (2, 22) and with a securing stop (1) for securing the position of tracked vehicles and/or wheeled vehicles on railway trucks with a load platform made of timber, wherein a part of the base plate forms a support for a chain or a wheel, the displacement of which in the secured position is limited in one direction by the securing stop, whilst sharp mandrels (3, 23, 30) adapted to be pressed into the load platform by the deadweight of the vehicle to be secured are arranged on the underside of the base plate, characterised in that the mandrels (3, 23, 30) exhibit a constant cross-section on a first part (4) of their length projecting above the base plate and the cross-section tapered to a point on a second part (5) of their length adjacent thereto.

2. Securing element according to Claim 1, characterised in that the constant cross-section of the mandrels (3) is circular.

3. Securing element according to Claim 1, characterised in that the constant cross-section of the mandrels (30) is X-shaped.

4. Securing element according to any of Claims 1-3, characterised in that the length of the part (4) with constant cross-section is shorter than the length of the part (5) with tapered cross-section.

5. Securing element according to Claim 4, characterised in that the length of the part (4) with constant cross-section is approximately equal to one third of the length of the part (5) with tapered cross-section.

6. Securing element according to any of Claims 1-5, characterised in that all the mandrels (3) of the base plate (2) are arranged mutually staggered, considered in the securing direction.

7. Securing element according to any of Claims 1-6, characterised in that the number of the mandrels (3) of the base plate (2) is limited to four.

8. Securing element according to any of Claims 1-7, characterised in that the centre lines of the mandrels (3) are oriented at right angles to the base plate (2).

9. Securing element according to any of Claims 1-8, characterised in that the base plate (22) is provided on its side carrying the mandrels (23) with a covering (26) exhibiting a high coefficient of friction.

10. Securing element according to Claim 9, characterised in that the covering (26) is resilient.

11. Securing element according to Claim 10, characterised in that the covering (26) consists of rubber or of a rubber substitute substance.

12. Securing element according to any of Claims 1 to 11, characterised in that the base plate (22) exhibits an arm (27) which is provided at its end remote from the securing stop (20, 21) with a retaining stop (28) to secure against sliding of the securing element relative to the railway truck.

13. Securing element according to Claim 12, characterised in that the retaining stop (28) is formed by the end of the arm (27), which is angled in the direction of the mandrels (23).

14. Securing element according to Claim 12 or 13, characterised in that the interval of the securing stop (21) relative to the retaining stop (28) is adjustable (Fig. 9).

15. Securing element according to any of Claims 1 to 14, characterised in that its securing stop (1) exhibits at least one approximately vertically oriented stop surface (8).

16. Securing element according to Claim 15, characterised in that it is provided with a further securing stop (18 : 20) which exhibits a stop surface (19 ; 24), the inclination of which is greater than the inclination of the stop surface (8 ; 25) of the first securing stop (1 ; 21).

17. Securing element according to Claim 16, characterised in that the securing stop (18) with the more steeply inclined stop surface (19) is formed by an auxiliary part (14) connected detachably to the securing element.

18. Securing element according to Claim 17, characterised in that the auxiliary part (14) exhibits at least one bracing bar (16) insertable each into a slot (15) of the first securing stop (1).

19. Securing element according to Claim 18, characterised in that the bracing bar (16) is provided with a mandrel (17) projecting obliquely downwards in the securing direction.

20. Securing element according to Claim 19, characterised in that mandrel (17) is formed by a part of the bracing bar (16).

21. Securing element according to Claim 16, characterised in that the two securing stops (20, 21) are arranged mutually juxtaposed.

22. Securing element according to any of Claims 1 to 21, characterised in that the base plate (2 ; 22) exhibits a support surface corresponding to the width of the vehicle chain or of the vehicle wheel.

23. Securing element according to any of Claims 1 to 22, characterised in that the base plate (2) is provided with a window (12) at a hand's width interval from one of its edges.

24. Securing element according to any of Claims 1 to 23, characterised in that it consists of steel plate.

**Revendications**

1. Elément d'immobilisation comprenant une plaque de base (2, 22) et une butée d'immobilisation (1), pour l'immobilisation de la position de véhicules à chaînes de roulement et/ou à roues sur des wagons de chemin de fer possédant une surface de charge en bois, dans lequel une partie de la plaque de base forme une portée pour une chaîne de roulement ou une roue, dont le déplacement dans la position immobilisée est limité dans une direction par la butée d'immobilisation, cependant que, sur la face inférieure de la plaque de base, sont agencées des pointes effilées (3, 23 ; 30) qui peuvent s'enfoncer dans la surface de roulement sous l'effet du poids propre du véhicule à immobiliser, caractérisé en ce que les pointes (3, 23, 30) présentent une section constante sur une première partie (4) de leur longueur qui fait saillie au-delà de la plaque de base et une section qui décroît en une pointe sur une deuxième partie (5) de leur longueur qui fait suite à la première.

2. Elément d'immobilisation selon la revendication 1, caractérisé en ce que la section constante des pointes (3) est circulaire.

3. Elément d'immobilisation selon la revendication 1, caractérisé en ce que la section constante des pointes (30) est en forme de X.

4. Elément d'immobilisation selon l'une des revendications 1 à 3, caractérisé en ce que la longueur de la partie (4) à section constante est plus petite que la longueur de la partie (5) à section décroissante.

5. Elément d'immobilisation selon la revendication 4, caractérisé en ce que la longueur de la partie (4) à section constante est à peu près égale à un tiers de la longueur de la partie (5) à section décroissante.

6. Elément d'immobilisation selon l'une des revendications 1 à 5, caractérisé en ce que toutes les pointes (3) de la plaque de base (2) sont disposées dans des positions décalées les unes par rapport aux autres, considérées dans la direction de l'immobilisation.

7. Elément d'immobilisation selon l'une des revendications 1 à 6, caractérisé en ce que le nombre des pointes (3) de la plaque de base (2) est limité à quatre.

8. Elément d'immobilisation selon l'une des revendications 1 à 7, caractérisé en ce que les axes des pointes (3) s'étendent perpendiculairement à la plaque de base (2).

9. Elément d'immobilisation selon l'une des revendications 1 à 8, caractérisé en ce que la plaque de base (22) est munie, sur sa face qui porte les pointes (23), d'un revêtement (23) possédant un grand coefficient de frottement.

10. Elément d'immobilisation selon la revendication 9, caractérisé en ce que le revêtement (26) est élastique.

11. Elément d'immobilisation selon la revendication 10, caractérisé en ce que le revêtement (26) est réalisé en caoutchouc ou en une matière de remplacement du caoutchouc.

12. Elément d'immobilisation selon l'une des revendications 1 à 11, caractérisé en ce que la plaque de base (22) présente un prolongement (27) qui est muni, à son extrémité qui est à l'opposé de la butée d'immobilisation, (20, 21), d'une butée de retenue (28) destinée à l'immobilisation à l'encontre des déplacements de l'élément d'immobilisation par rapport au wagon de chemin de fer.

13. Elément d'immobilisation selon la revendication 2, caractérisé en ce que la butée de retenue (28) est formée par l'extrémité du prolongement (27) qui est rabattue parallèlement aux pointes (23).

14. Elément d'immobilisation selon la revendication 12 ou 13, caractérisé en ce que la distance de la butée d'immobilisation (21) par rapport à la butée de retenue (28) est réglable (Fig. 9).

15. Elément d'immobilisation selon une des revendications 1 à 14, caractérisé en ce que sa butée d'immobilisation (1) présente au moins une surface de butée (8) qui s'étend à peu près verticalement.

16. Elément d'immobilisation selon la revendication 15, caractérisé en ce qu'il est muni d'une autre butée d'immobilisation (18, 20) qui présente une surface de butée (19 ; 24) dont l'inclinaison est plus grande que l'inclinaison de la surface de butée (8 ; 25) de la première butée d'immobilisation (1 ; 21).

17. Elément d'immobilisation selon la revendication 16, caractérisé en ce que la butée d'immobilisation (18) qui présente la surface de butée (19) plus fortement inclinée est formée par un élément additionnel (14) relié à l'élément d'immobilisation par une liaison démontable.

18. Elément d'immobilisation selon la revendication 17, caractérisé en ce que l'élément additionnel (14) présente au moins un voile de soutien (16) qui peut être emboîté dans une fente (15) de la première butée d'immobilisation (1).

19. Elément d'immobilisation selon la revendication 18, caractérisé en ce que le voile de soutien (16) est muni d'une pointe (17) qui s'étend obliquement vers le bas dans la direction de l'immobilisation.

20. Elément d'immobilisation selon la revendication 19, caractérisé en ce que la pointe (17) est formée par une partie du voile de soutien (16).

21. Elément d'immobilisation selon la revendication 16, caractérisé en ce que les deux butées d'immobilisation (20, 21) sont disposées l'une à côté de l'autre.

22. Elément d'immobilisation selon une des revendications 1 à 21, caractérisé en ce que la plaque de base (2 ; 22) présente une surface de portée qui correspond à la largeur de la chaîne de roulement ou à la roue du véhicule.

23. Elément d'immobilisation selon une des revendications 1 à 22, caractérisé en ce que la plaque de base (2) est munie d'une ouverture (12) placée à une distance de l'un de ses bords qui convient pour donner prise.

24. Elément d'immobilisation selon l'une des revendications 1 à 23, caractérisé en ce qu'il est réalisé en tôle d'acier.

Fig. 1

Fig. 2

Fig. 3

1

0 047 222

Fig.6

Fig.7

Fig.4

Fig.5

2

Fig. 10

Fig. 8

Fig. 9

20

21

22

23

24

25

26

27

28

29

30

Fig. 11

0 047 222